# EUROPEAN PATENT SPECIFICATION

(11) **EP 2 534 016 B1**
(45) Date of publication and mention of the grant of the patent: **05.08.2015**
(21) Application number: 11740104.2
(22) Date of filing: 17.01.2011
(51) Int. Cl.: B60R 25/00, B60R 16/037

(54) **DRIVER SPECIFIC VEHICLE CONFIGURATION**
FAHRERSPEZIFISCHE FAHRZEUGKONFIGURATION
CONFIGURATION DE VÉHICULE SPÉCIFIQUE À UN CONDUCTEUR

(30) Priority: 08.02.2010 SE 1050121
(43) Date of publication of application: 19.12.2012
(73) Proprietor: Scania CV AB, 151 87 Södertälje (SE)
(72) Inventor: SANDBERG, Tony, S-645 44 Strängnäs (SE)
(74) Representative: Scania CV AB
(86) International application number: PCT/SE2011/050043
(87) International publication number: WO 2011/096871

(56) References cited:
- EP-A2- 1 138 561
- WO-A1-2008/044093
- US-A- 6 122 580
- US-A1- 2002 062 185
- US-A1- 2008 275 604
- US-A1- 2008 306 652
- US-B1- 6 198 996
- US-B1- 6 430 488

## Description

### BACKGROUND TO THE INVENTION AND PRIOR ART

The present invention relates generally to driver specific vehicle configuration. In particular, the invention concerns a system according to the preamble of claim 1 and a method according to the preamble of claim 5. The invention also relates to a computer program according to claim 9 and a computer readable medium according to claim 10.

The functions of modern vehicles are computerized to an ever increasing degree. Among other things, it thereby is possible to accomplish extremely many combinations of settings in each individual vehicle. In commercial situations where a number of drivers alternately use a set of vehicles, such as trucks, busses and taxis, at a particular driving occasion, it may therefore be difficult for a certain driver of a given vehicle to find a setting of the vehicle that matches the driver in question's specific needs.

There are solutions for automatically personalizing motor vehicles according to different drivers' preferences concerning the available settings in a vehicle. For example US 2002/0062185 discloses a solution through which a vehicle is automatically configured according to a user's specific preferences. Based on a user's identity, various functions in the vehicle are set according to the user's earlier indicated requirements. The function settings follow the user, such that if the user changes to a new vehicle corresponding settings are effectuated also in the new vehicle. In connection with a change of vehicles the vehicle's profile is compared with the user's requirements in order to match the requirements as well as possible.

US 6,122,580 describes a system through which drivers gain access to the vehicles of a fleet to which the respective driver is authorized. A data carrier, such as a key or a key card, is here used to identify each driver. In connection with a driver intending to unlock a vehicle data concerning the driver's identity are reported via a data radio link to central data resource, where said data are matched against an authorization register. If the driver is found to be authorized, the vehicle is unlocked and the driver is given a possibility to start the engine as well as to drive the vehicle. Moreover, the vehicle is automatically adjusted according to the driver's personal settings of rear view mirrors, seat, headrest, belt position, steering-wheel position etc. Also functions, such as the temperature setting of an air conditioning system, engine and economy settings, gear programs and a maximum speed may be set automatically according to the driver's preferences in connection with that the driver gains access to the vehicle. Additionally, if the vehicle is equipped with multiple locks (for example to the driver's cabin, the ignition, the fuel tank lid) different persons may be given access to different parts of the vehicle. A summary of the driver's personal settings can be stored on the data carrier, in the vehicle or in the central data resource.

Consequently, there are solutions for personalizing vehicles in efficient manners. However, there is no solution that allows or prevents a user from gaining access to a particular function in a vehicle (or a given service implementable via a vehicle) depending upon whether the driver is authorized / has the competence or not to utilize the function/service in question.

### SUMMARY OF THE INVENTION

The object of the present invention is therefore to provide a solution to the above problems and thus ensure that only a driver who is authorized to use a certain vehicular function or service is given access to this function/service in the vehicle.

According to one aspect of the invention, the object is achieved by the initially described system, wherein the central data processing unit is configured to receive personal data designating an identity of a user of the vehicle and receive vehicular data associated there with designating the identity of the vehicle in question. In response thereto, the central data processing unit is further configured to investigate whether or not the user whose identity is designated by said personal data is an authorized user of the vehicle. Given that the user is found to be authorized, the central data processing unit is configured to match a description of a set of vehicular functions for which the user is authorized with a set of vehicular functions that are potentially possible to implement in the vehicle. It is further presumed that the central data processing unit is connected to a central storage unit, which for each user in a group of users stores a respective description of the set of vehicular functions for which the user in question is authorized. Moreover, the description of the set of vehicular functions for which the user is authorized is adapted as the user is educated on such vehicular functions. After said matching, the central data processing unit is configured to generate an activation message designated to upon reception in the vehicle cause activation exclusively of those functions for which the user is authorized and which are included in the first set of vehicular functions, and transfer the activation message to the vehicle.

One important advantage attained through this system is that all vehicles in a fleet may be equipped with a relatively extensive first set of potentially implementable functions, and at the same time, the vehicles can be controlled so that no driver is given access to functions/services that he/she is not trained to handle. Thereby efficient vehicle production is combined with a high level of safety.

Another advantage is that the system renders it very simple to adapt the drivers' access to various vehicular functions and services as the drivers are educated on these functions/services, for instance through so-called Interactive Driver Training (IDT).

According to one embodiment of this aspect of the invention, the central data processing unit is configured to, if the user whose identity is designated by said personal data is found not to be an authorized user of the vehicle, generate an activation message which is adapted to upon reception in the vehicle cause inhibition of all functions in the vehicle. This is advantageous since unauthorized use of the vehicle is thereby efficiently prevented.

According to another embodiment of this aspect of the invention, the central data processing unit is connected to a central storage unit, which stores a respective description of said first set of vehicular functions for each of a number of vehicles. This is advantageous since it is thereby possible to survey, and if necessary, modify each vehicle's capacity and the associated functional description.

According to a further embodiment of this aspect of the invention, the user interface is configured to receive information based upon which said personal data are generated via: an electronic smartcard, a code input device, a voice recognition means, a fingerprint scanning means, a facial recognition means, an iris recognition means and/or a retinal recognition means. This offers both a high flexibility and safety in the user identification.

According to another aspect of the invention, the object is achieved through the method described initially, wherein the method is performed in the central data processing unit and comprise: reception of said personal data and said vehicular data associated there with, and in response thereto investigating whether the user whose identity is designated by said personal data is an authorized user of the vehicle; and given that this is the case, matching a description of a set of vehicular functions for which the user is authorized with the first set of vehicular functions. Here, it is presumed that the central data processing unit is connected to a central storage unit, which for each user in a group of users stores a respective description of the set of vehicular functions for which the user in question is authorized.

Moreover, the description of the set of vehicular functions for which the user is authorized is adapted as the user is educated on such vehicular functions. Additionally, the method comprises: generating an activation message designated to upon reception in the vehicle cause activation exclusively of those functions for which the user is authorized and which are included in the first set of vehicular functions, and transferring the activation message to the vehicle. The advantages of this method as well as the embodiments thereof are apparent from the discussion above with reference to the proposed system.

According to yet another aspect of the invention, the object is achieved by a computer program directly loadable into the internal memory of a computer, comprising software for controlling the steps according to the above-proposed method when said program is executed on a computer.

According to a further aspect of the invention, the object is achieved by a computer readable medium with a program recorded thereon, where the program is adapted to cause a computer to control the steps according to the above-proposed method.

### SHORT DESCRIPTION OF THE DRAWINGS

The present invention is now to be explained more closely by means of preferred embodiments, which are disclosed as examples, and with reference to the attached drawings.
- Figure 1: schematically shows a system according to preferred embodiments of the invention, and
- Figure 2: shows a flow diagram which illustrates the general method according to the invention.

### DESCRIPTION OF EMBODIMENTS OF THE INVENTION

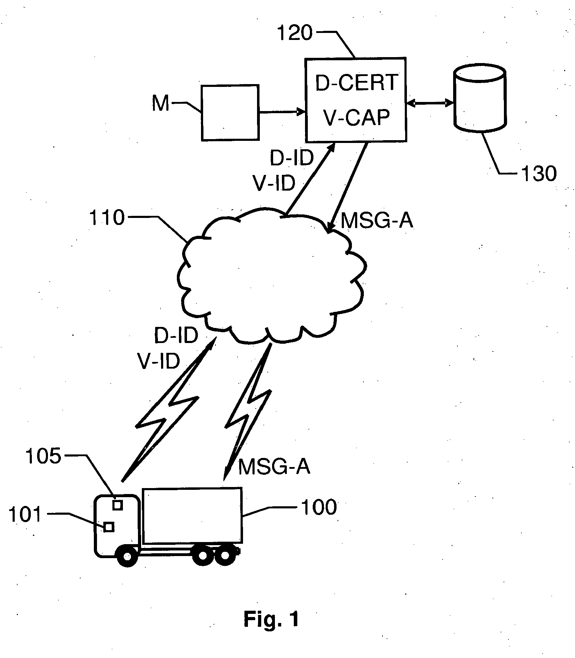

We refer initially to Figure 1, which shows a system according to preferred embodiments of the invention

The proposed system includes a set of motor vehicles of which one vehicle 100 is illustrated in Figure 1. It is presumed that each vehicle 100 comprises a first set of vehicular functions V-CAP, which are potentially possible to execute in the vehicle 100. These functions encompass all aspects of the vehicle's 100 maximal functional capacity. Thus, the first set V-CAP may include both physical equipment (such as cranes, lifting arrangements and power takeouts) and software implemented functions/ services (such as systems for automatic driver assistance, anti skidding systems, adaptive cruise control and anti collision systems). The vehicle 100 is also equipped with a user interface 101 and a communication device 105.

The user interface 101 is configured to receive personal data DID designating an identity of a user of the vehicle 100. Specifically, this may mean that the user, after having unlocked the vehicle 100 must identify himself/herself before he/she can start the engine, or activate any other functions in the vehicle 100. According to one preferred embodiment of the invention, the user interface 101 is configured to receive information from the user based on which information the actual personal data D-ID is then generated. For example the user interface 101 may include a reader for reading a smartcard being unique for each user. As an alternative, or a complement thereto, the user interface 101 may include a code input device (for example a keypad via which the user can enter a so-called PIN code, or corresponding login data), a voice recognition means for identifying an acoustic profile of his/her vocal organ being unique for each user, a fingerprint scanning means for registering a pattern of one or more fingers of the user being unique for each user, a facial recognition means for registering characteristic features of the user's appearance, an iris recognition means for registering the user's unique iris pattern and/or a retinal recognition means for registering the unique appearance of the user's retina.

The communication device 105 is configured to, in response to receiving personal data D-ID, transfer these data to a central data processing unit 120. The communication device 105 is also configured to in association with (for example together with) the personal data D-ID transfer vehicular data V-ID, which designate the vehicle's identity to the central data processing unit 120. The vehicular data V-ID is preferably permanently stored in the vehicle 100 and may for instance be linked to the vehicle's chassis number. Preferably, the personal data D-ID and the vehicular data V-ID are sent via a wireless interface (for example radio based) and a communication network 110 to which the central data processing unit 120 is connected.

The central data processing unit 120 is configured to receive the personal data D-ID and the vehicular data V-ID associated thereto. Thereafter, the unit 120 is configured to investigate whether the user whose identity is indicated by the personal data DID is an authorized user of the vehicle 100. This investigation may preferably be performed through a simple table lookup in a database. Given that the user is found to be authorized, the central data processing unit 120 is configured to match a description D-CERT of a set of vehicular functions for which the user is authorized against a first set of vehicular functions V-CAP being potentially possible to execute in the vehicle 100.

According to one preferred embodiment of the invention, the central data processing unit 120 is connected to a central storage unit 130, which stores a respective description of the first set of vehicular functions V-CAP for each vehicle in said set of vehicles. Alternatively, the first set of vehicular functions V-CAP may be transferred together with the vehicular data V-ID from the vehicle 100 to the central data processing unit 120.

According to another preferred embodiment of the invention, the central data processing unit 120 is connected to a central storage unit 130, which for each user in a group of users stores a respective description D-CERT of the set of vehicular functions for which the user in question is authorized. Alternatively, the description D-CERT may be transferred together with the personal data D-ID from the vehicle 100 to the central data processing unit 120.

As is apparent from Figure 1, in this example the same storage unit 130 is used for the descriptions of the first set of vehicular functions V-CAP and the descriptions D-CERT of the users' authorizations. Of course, according to the invention, these data may equally well be stored in different storage units, or at least one of the descriptions may be retrieved from the vehicle 100 according to what has been described above.

In any case, the central data processing unit 120 is configured to generate an activation message MSG-A, which is adapted to upon reception in the vehicle 100 cause activation exclusively of those functions for which the user is authorized and which at the same time are included in the first set of vehicular functions V-CAP. Thereafter, the central data processing unit 120 is configured to transfer the activation message MSG-A to the vehicle 100. Analogous to the personal data D-ID and the vehicular data V-I D the activation message MSG-A is preferably sent via the communication network 110 and the wireless interface.

The communication device 105 in the vehicle 100, in turn, is configured to receive the activation message MSG-A, and in response thereto, a set of functions in the vehicle 100 is activated according to the activation message MSG-A.

According to one preferred embodiment of the invention the central data processing unit 120 is configured to, if the user whose identity is designated by the personal data D-ID is found not to be an authorized user of the vehicle 100, generate an activation message MSG-A which is configured to upon reception in the vehicle 100 cause inhibition of all functions in the vehicle 100. Thereby, it is ensured that no unauthorized use of the vehicle 100 takes place.

It is generally advantageous if the central data processing unit 120 is configured to operate according to instructions of software executed in at least one processor in the unit 120. It is therefore desirable that the data processing unit 120 includes, or by other means is associated with, a memory module M including software, which when being executed in the unit 120 causes the above-described procedure to be performed. For the same reason, it is advantageous if the vehicle 100 includes software for executing reception of the personal data D-ID, executing transmission of the personal data D-ID and the vehicular data V-ID to the central data processing unit 120 and accomplishing activation/deactivation of vehicular functions according to a received activation message MSG-A.

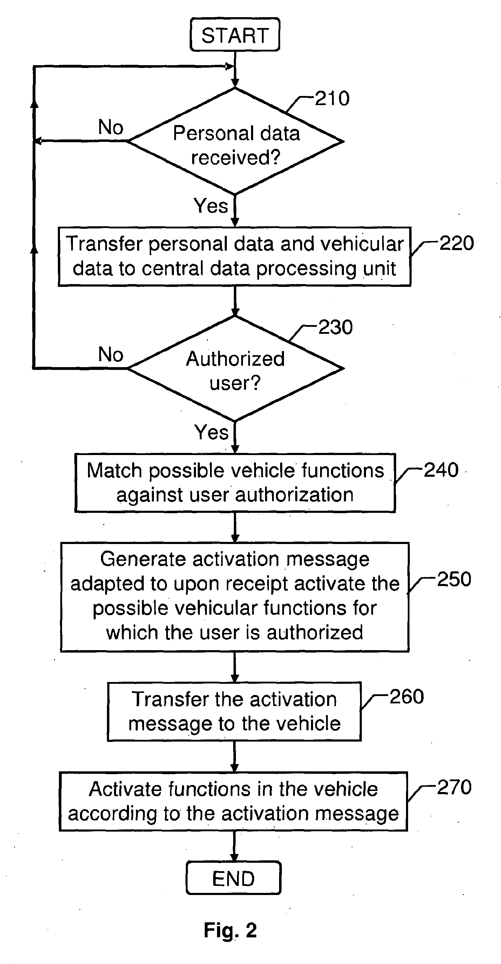

In order to summarize, the general method according to the invention to control a motor vehicle including a first set of vehicular functions which are potentially possible to execute in the vehicle will now be described with reference to the flow diagram in Figure 2.

A first step 210 investigates whether or not a user interface in the vehicle has received information based upon which personal data describing a user's identity may be generated. If no such information har been received, the procedure loops back and stays in step 210. Otherwise, i.e. if relevant information *has* been received, a step 220 follows. Here the personal data and vehicular data designating an identity of the vehicle which the user intends to activate are transferred to a central data processing unit.

Thereafter, a step 230 investigates if the user whose identity is designated by the personal data is an authorized user of the designated vehicle, and if this is found to be the case a step 240 follows. Otherwise, the procedure loops back to step 210. According to one preferred embodiment of the invention, all functions in the vehicle are also inhibited.

Step 240 matches a description of a set of vehicular functions for which the user is authorized against a first set of vehicular functions which are potentially possible to execute in the vehicle (i.e. the vehicle's maximal functional capacity).

Thereafter, a step 250 generates an activation message, which is adapted to upon receipt in the vehicle cause only those functions for which the user is authorized, and that also are included in the first set of vehicular functions, to be activated. Theoretically, the intersection between the possible functions in the vehicle and the functions for which the user is authorized may be empty. Consequently, in such a case, no functions in the vehicle will be activated. In practice, however, it is not probable that this situation arises because it is highly likely that all users are authorized for at least the most basic functions that are included in each vehicle's first set of vehicular functions.

A subsequent step 260 transfers the activation message to the vehicle, and in response thereto a step 270 activates a set of functions in the vehicle in accordance with the activation message.

Thus, steps 210, 220 and 270 are executed in the vehicle while steps 230 to 260 are executed in the central data processing unit.

The method steps described with reference to Figure 2 may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the embodiments described with reference to the figures, but may be varied freely within the scope of the following claims.

## Claims

1. A system for controlling a motor vehicle (100) comprising a first set of vehicular functions (V-CAP) which are potentially possible to execute in the vehicle (100), where the vehicle (100) includes:
a user interface (101) configured to receive personal data (D-ID) designating an identity of a user of the vehicle (100), and
a communication device (105) configured to, in response to received personal data (D-ID), transfer said personal data (D-ID) and in association there with transfer vehicular data (V-ID) designating the identity of the vehicle (100) to a central data processing unit (120), and receive activation messages (MSG-A) from the central data processing unit (120) and in response to a received activation message (MSG-A) adapt at least one setting of the vehicle (100), **characterized in that**
the central data processing unit (120) is configured to:
receive said personal data (D-ID) and said vehicular data (V-ID) associated there with, and in response thereto
investigate whether the user whose identity is designated by said personal data (D-ID) is an authorized user of the vehicle (100); and given that this is the case,
match a description (D-CERT) of a set of vehicular functions for which the user is authorized with the first set of vehicular functions (V-CAP), wherein the central data processing unit (120) is connected to a central storage unit (130) which for each user in a group of users stores a respective description (D-CERT) of the set of vehicular functions for which the user in question is authorized, and wherein the description (D-CERT) of the set of vehicular functions for which the user is authorized is adapted as the user is educated on such vehicular functions,
generate an activation message (MSG-A) designated to upon reception in the vehicle (100) cause activation exclusively of those functions for which the user is authorized and which are included in the first set of vehicular functions (V-CAP), and
transfer the activation message (MSG-A) to the vehicle (100).

2. The system according to claim 1, wherein the central data processing unit (120) is configured to, if the user whose identity is designated by said personal data (D-ID) is found not to be an authorized user of the vehicle (100), generate an activation message (MSG-A) which is adapted to upon reception in the vehicle (100) cause inhibition of all functions in the vehicle (100).

3. The system according to any one of the preceding claims, wherein the central data processing unit (120) is connected to a central storage unit (130) storing a respective description of said first set of vehicular functions (V-CAP) for each of a number of vehicles (100).

4. The system according to any one of the preceding claims, wherein the user interface (101) is configured to receive information based upon which said personal data (D-ID) are generated via at least one of: an electronic smartcard, a code input device, a voice recognition means, a fingerprint scanning means, a facial recognition means, an iris recognition means and a retinal recognition means.

5. A method for controlling a motor vehicle (100) comprising a first set of vehicular functions (V-CAP) which are potentially possible to execute in the vehicle (100), the method comprising:
receiving, via a user interface (101), personal data (D-ID) designating an identity of a user of the vehicle (100), and
transferring, in response to a received activation message (MSG-A), via a communication device (105), said personal data (D-ID) associated with vehicular data (V-ID) designating the identity of the vehicle (100) to a central data processing unit (120),
receiving in the vehicle (100) activation messages (MSG-A) from the central data processing unit (120) and in response to a received activation message (MSG-A) adapting at least one setting of the vehicle (100),
**characterized in**, in the central data processing unit (120):
receiving said personal data (D-ID) and said vehicular data (V-ID) associated there with, and in response thereto
investigating whether the user whose identity is designated by said personal data (D-ID) is an authorized user of the vehicle (100); and given that this is the case,
matching a description (D-CERT) of a set of vehicular functions for which the user is authorized with the first set of vehicular functions (V-CAP), wherein the central data processing unit (120) is connected to a central storage unit (130) which for each user in a group of users stores a respective description (D-CERT) of the set of vehicular functions for which the user in question is authorized, and wherein the description (D-CERT) of the set of vehicular functions for which the user is authorized is adapted as the user is educated on such vehicular functions,
generating an activation message (MSG-A) designated to upon reception in the vehicle (100) cause activation exclusively of those functions for which the user is authorized and which are included in the first set of vehicular functions (V-CAP), and
transferring the activation message (MSG-A) to the vehicle (100).

6. The method according to claim 5, wherein, if the user whose identity is designated by said personal data (D-ID) is found not to be an authorized user of the vehicle (100), the method comprising generating an activation message (MSG-A) which is adapted to upon reception in the vehicle (100) cause inhibition of all functions in the vehicle (100).

7. The method according to any one of the claims 5 or 6, comprising storing a respective one of a description of said first set of vehicular functions (V-CAP) for each of a number of vehicles (100) in a central storage unit (130) to which the central data processing unit (120) is connected.

8. The method according to any one of claims 5 to 7, comprising receiving information based upon which said personal data (D-ID) are generated via at least one of: an electronic smartcard, a code input device, a voice recognition means, a fingerprint scanning means, a facial recognition means, an iris recognition means and a retinal recognition means.

9. A computer program directly loadable to the internal memory (M) of a computer, comprising software for controlling the steps according to any of claims 5 to 8 when said program is executed on the computer.

10. A computer readable medium (M) with a program recorded thereon, where the program is adapted to cause a computer to control the steps according to any of claims 5 to 8.

## Patentansprüche

1. System zum Steuern eines Kraftfahrzeugs (100), das eine erste Menge an Fahrzeugfunktionen (V-CAP) umfasst, die in dem Fahrzeug (100) potentiell ausführbar sind, wobei das Fahrzeug (100) umfasst:
eine Benutzerschnittstelle (101), die dazu eingerichtet ist, persönliche Daten (D-ID) zu empfangen, die eine Identität eines Benutzers des Fahrzeugs (100) kennzeichnen, und
eine Kommunikationsvorrichtung (105), die dazu eingerichtet ist, in Erwiderung auf die empfangenen persönlichen Daten (D-ID) die persönlichen Daten (D-ID) und damit verbundene Fahrzeugdaten (V-ID), die die Identität des Fahrzeugs (100) kennzeichnen, an eine zentrale Datenverarbeitungseinheit (120) zu übermitteln, und Aktivierungsnachrichten (MSG-A) von der zentralen Datenverarbeitungseinheit (120) zu empfangen und in Erwiderung auf eine empfangene Aktivierungsnachricht (MSG-A) wenigstens eine Einstellung des Fahrzeugs (100) anzupassen, **dadurch gekennzeichnet, dass**
die zentrale Datenverarbeitungseinheit (120) dazu eingerichtet ist:
die persönlichen Daten (D-ID) und die damit verbundenen Fahrzeugdaten (V-ID) zu empfangen, und in Erwiderung darauf
zu ermitteln, ob der Benutzer, dessen Identität durch die persönlichen Daten (D-ID) gekennzeichnet ist, ein autorisierter Benutzer des Fahrzeugs (100) ist; und vorausgesetzt, dass dies der Fall ist,
eine Beschreibung (D-CERT) einer Menge an Fahrzeugfunktionen, für die der Benutzer autorisiert ist, mit der ersten Menge an Fahrzeugfunktionen (V-CAP) zu vergleichen, wobei die zentrale Datenverarbeitungseinheit (120) mit einer zentralen Speichereinheit (130) verbunden ist, die für jeden Benutzer in einer Gruppe von Benutzern eine entsprechende Beschreibung (D-CERT) aus der Menge an Fahrzeugfunktionen speichert, für die der betroffene Benutzer autorisiert ist, und wobei die Beschreibung (D-CERT) aus der Menge an Fahrzeugfunktionen, für die der Benutzer autorisiert ist, daran angepasst ist, wie der Benutzer für solche Fahrzeugfunktionen geschult ist,
eine Aktivierungsnachricht (MSG-A) zu erzeugen, die dazu vorgesehen ist, auf einen Empfang in dem Fahrzeug (100) hin ein Aktivieren ausschließlich der Funktionen zu veranlassen, für die der Benutzer autorisiert ist und die in der ersten Menge an Fahrzeugfunktionen (V-CAP) enthalten sind, und
die Aktivierungsnachricht (MSG-A) an das Fahrzeug (100) zu übermitteln.

2. System nach Anspruch 1, wobei die zentrale Datenverarbeitungseinheit (120) dazu eingerichtet ist, dann, wenn festgestellt wird, dass der Benutzer, dessen Identität durch die persönlichen Daten (D-ID) gekennzeichnet ist, kein autorisierter Benutzer des Fahrzeugs (100) ist, eine Aktivierungsnachricht (MSG-A) zu erzeugen, die dazu eingerichtet ist, auf einen Empfang in dem Fahrzeug (100) hin ein Sperren aller Funktionen in dem Fahrzeug (100) zu veranlassen.

3. System nach einem der vorangehenden Ansprüche, wobei die zentrale Datenverarbeitungseinheit (120) mit einer zentralen Speichereinheit (130) verbunden ist, die eine entsprechende Beschreibung der ersten Menge an Fahrzeugfunktionen (V-CAP) für jedes aus einer Anzahl an Fahrzeugen (100) speichert.

4. System nach einem der vorangehenden Ansprüche, wobei die Benutzerschnittstelle (101) dazu eingerichtet ist, Informationen zu empfangen, basierend auf denen die persönliche Daten (D-ID) mittels einem der Folgenden erzeugt werden:
eine elektronische Smartcard, eine Codeeingabevorrichtung, ein Stimmenerkennungsmittel, ein Fingerabdruckscanmittel, ein Gesichtserkennungsmittel, ein Iriserkennungsmittel und ein Netzhauterkennungsmittel.

5. Verfahren zum Steuern eines Kraftfahrzeugs (100) das eine erste Menge an Fahrzeugfunktionen (V-CAP) umfasst, die in dem Fahrzeug (100) potentiell möglich ausführbar sind, wobei die Methode umfasst:
Empfangen von persönlichen Daten (D-ID) mittels einer Benutzerschnittstelle (101), die eine Identität eines Benutzers des Fahrzeugs (100) kennzeichnen, und
in Erwiderung auf eine empfangene Aktivierungsnachricht (MSG-A) Übermitteln der persönlichen Daten (D-ID) mittels einer Kommunikationsvorrichtung (105), verbunden mit Fahrzeugdaten (V-ID), die die Identität des Fahrzeugs (100) kennzeichnen, an eine zentrale Datenverarbeitungseinheit (120),
Empfangen von Aktivierungsnachrichten (MSG-A) in dem Fahrzeug (100) von der zentralen Datenverarbeitungseinheit (120) und in Erwiderung auf eine empfangene Aktivierungsnachricht (MSG-A) Anpassen wenigstens einer Einstellung des Fahrzeugs (100),
**gekennzeichnet durch**, in der zentralen Datenverarbeitungseinheit (120):
Empfangen der persönlichen Daten (D-ID) und der damit verbundenen Fahrzeugdaten (V-ID), und in Erwiderung darauf
Ermitteln, ob der Benutzer, dessen Identität **durch** die persönlichen Daten (D-ID) gekennzeichnet ist, ein autorisierter Benutzer des Fahrzeugs (100) ist; und vorausgesetzt, dass dies der Fall ist,
Vergleichen einer Beschreibung (D-CERT) einer Menge an Fahrzeugfunktionen, für die der Benutzer autorisiert ist, mit der ersten Menge an Fahrzeugfunktionen (V-CAP), wobei die zentrale Datenverarbeitungseinheit (120) mit einer zentralen Speichereinheit (130) verbunden ist, die für jeden Benutzer in einer Gruppe von Benutzern eine entsprechende Beschreibung (D-CERT) aus der Menge an Fahrzeugfunktionen speichert, für die der betroffene Benutzer autorisiert ist, und wobei die Beschreibung (D-CERT) aus der Menge an Fahrzeugfunktionen, für die der Benutzer autorisiert ist, daran angepasst ist, wie der Benutzer für solche Fahrzeugfunktionen geschult ist,
Erzeugen einer Aktivierungsnachricht (MSG-A), die dafür vorgesehen ist, auf Empfang in dem Fahrzeug (100) hin ein Aktivieren ausschließlich derer Funktionen zu veranlassen, für die der Benutzer autorisiert ist, und die in der ersten Menge an Fahrzeugfunktionen (V-CAP) enthalten sind, und
Übermitteln der Aktivierungsnachricht (MSG-A) an das Fahrzeug (100).

6. Verfahren nach Anspruch 5, wobei dann, wenn festgestellt wird, dass der Benutzer, dessen Identität durch die persönlichen Daten (D-ID) gekennzeichnet ist, kein autorisierter Benutzer des Fahrzeugs (100) ist, die Methode umfasst: Erzeugen einer Aktivierungsnachricht (MSG-A), die dazu eingerichtet ist, auf Empfang in dem Fahrzeug (100) hin ein Sperren aller Funktionen in dem Fahrzeug (100) zu veranlassen.

7. Verfahren nach einem der Ansprüche 5 oder 6, das umfasst: Speichern einer bestimmten Beschreibung aus einer Beschreibung der ersten Menge an Fahrzeugfunktionen (V-CAP) für jedes aus einer Anzahl an Fahrzeugen (100) in einer zentralen Speichereinheit (130), mit der die zentrale Datenverarbeitungseinheit (120) verbunden ist.

8. Verfahren nach einem der Ansprüche 5 bis 7, das umfasst: Empfangen von Informationen, basierend auf denen die persönlichen Daten (D-ID) mittels einem der Folgenden erzeugt werden: eine elektronische Smartcard, eine Codeeingabevorrichtung, ein Stimmenerkennungsmittel, ein Fingerabdruckscanmittel, ein Gesichtserkennungsmittel, ein Iriserkennungsmittel und ein Netzhauterkennungsmittel.

9. Computerprogramm, das direkt in den internen Speicher (M) eines Computers ladbar ist, das Software zum Steuern der Schritte nach einem der Ansprüche 5 bis 8 umfasst, wenn das Programm auf dem Computer ausgeführt wird.

10. Computerlesbares Medium (M) mit einem darauf gespeicherten Programm, wobei das Programm dazu eingerichtet ist, einen Computer dazu zu veranlassen, die Schritte nach einem der Ansprüche 5 bis 8 zu steuern.

## Revendications

1. Système de commande d'un véhicule à moteur (100) comprenant un premier ensemble de fonctions véhiculaires (V-CAP) qui peuvent potentiellement être exécutées dans le véhicule (100), le véhicule (100) comportant :
une interface utilisateur (101) configurée pour recevoir des données personnelles (D-ID) désignant une identité d'un utilisateur du véhicule (100), et
un dispositif de communication (105) configuré pour, en réponse aux données personnelles (D-ID) reçues, transférer lesdites données personnelles (D-ID) et, en association avec celles-ci, transférer des données véhiculaires (V-ID) désignant l'identité du véhicule (100), à une unité de traitement de données centrale (120), et recevoir des messages d'activation (MSG-A) en provenance de l'unité de traitement de données centrale (120) et, en réponse à un message d'activation reçu (MSG-A), adapter au moins un réglage du véhicule (100), **caractérisé en ce que**
l'unité de traitement de données centrale (120) est configurée pour :
recevoir lesdites données personnelles (D-ID) et lesdites données véhiculaires (V-ID) associées à celles-ci, et, en réponse à cette réception
examiner si l'utilisateur dont l'identité est désignée par lesdites données personnelles (D-ID) est un utilisateur autorisé du véhicule (100) ; et si tel est le cas,
établir une correspondance entre une description (D-CERT) d'un ensemble de fonctions véhiculaires pour lequel l'utilisateur est autorisé et le premier ensemble de fonctions véhiculaires (V-CAP), où l'unité de traitement de données centrale (120) est connectée à une unité de stockage centrale (130) qui, pour chaque utilisateur d'un groupe d'utilisateurs, stocke une description (D-CERT) respective de l'ensemble de fonctions véhiculaires pour lequel l'utilisateur en question est autorisé, et où la description (D-CERT) de l'ensemble de fonctions véhiculaires pour lequel l'utilisateur est autorisé est adaptée car l'utilisateur est éduqué à propos de ces fonctions véhiculaires,
générer un message d'activation (MSG-A) désigné pour, lors de la réception dans le véhicule (100), provoquer une activation exclusivement des fonctions pour lesquelles l'utilisateur est autorisé et qui sont incluses dans le premier ensemble de fonctions véhiculaires (V-CAP), et
transférer le message d'activation (MSG-A) au véhicule (100).

2. Système selon la revendication 1, dans lequel l'unité de traitement de données centrale (120) est configurée pour, s'il est trouvé que l'utilisateur dont l'identité est désignée par lesdites données personnelles (D-ID) n'est pas un utilisateur autorisé du véhicule (100), générer un message d'activation (MSG-A) qui est adapté pour, lors de la réception dans le véhicule (100), provoquer le blocage de toutes les fonctions dans le véhicule (100).

3. Système selon l'une quelconque des revendications précédentes, dans lequel l'unité de traitement de données centrale (120) est connectée à une unité de stockage centrale (130) stockant une description respective dudit premier ensemble de fonctions véhiculaires (V-CAP) pour chacun d'un certain nombre de véhicule (100).

4. Système selon l'une quelconque des revendications précédentes, dans lequel l'interface utilisateur (101) est configurée pour recevoir des informations en fonction desquelles lesdites données personnelles (D-ID) sont générées via au moins l'un de : une carte à puce électronique, un dispositif de saisie de code, un moyen de reconnaissance vocale, un moyen de numérisation d'empreintes digitales, un moyen de reconnaissance faciale, un moyen de reconnaissance d'iris et un moyen de reconnaissance rétinien.

5. Procédé de commande d'un véhicule à moteur (100) comprenant un premier ensemble de fonctions véhiculaires (V-CAP) qui peuvent potentiellement être exécutées dans le véhicule (100), le procédé comprenant :
la réception, via une interface utilisateur (101), de données personnelles (D-ID) désignant une identité d'un utilisateur du véhicule (100), et
le transfert, en réponse à un message d'activation (MSG-A) reçu, via un dispositif de communication (105), desdites données personnelles (D-ID) associées à des données véhiculaires (V-ID) désignant l'identité du véhicule (100), à une unité de traitement de données centrale (120),
la réception dans le véhicule (100) de messages d'activation (MSG-A) en provenance de l'unité de traitement de données centrale (120) et, en réponse à un message d'activation (MSG-A) reçu, l'adaptation d'au moins un réglage du véhicule (100),
**caractérisé par**, dans l'unité de traitement de données centrale (120) :
la réception desdites données personnelles (D-ID) et desdites données véhiculaires (V-ID) associées à celles-ci, et, en réponse à cette réception
l'examen du fait que l'utilisateur dont l'identité est désignée par lesdites données personnelles (D-ID) est un utilisateur autorisé du véhicule (100) ; et si tel est le cas,
l'établissement d'une correspondance entre une description (D-CERT) d'un ensemble de fonctions véhiculaires pour lequel l'utilisateur est autorisé et le premier ensemble de fonctions véhiculaires (V-CAP), où l'unité de traitement de données centrale (120) est connectée à une unité de stockage centrale (130) qui, pour chaque utilisateur d'un groupe d'utilisateurs, stocke une description (D-CERT) respective de l'ensemble de fonctions véhiculaires pour lequel l'utilisateur en question est autorisé, et où la description (D-CERT) de l'ensemble de fonctions véhiculaires pour lequel l'utilisateur est autorisé est adaptée car l'utilisateur est éduqué à propos de ces fonctions véhiculaires,
la génération d'un message d'activation (MSG-A) désigné pour, lors de la réception dans le véhicule (100), provoquer une activation exclusivement des fonctions pour lesquelles l'utilisateur est autorisé et qui sont incluses dans le premier ensemble de fonctions véhiculaires (V-CAP), et
le transfert du message d'activation (MSG-A) au véhicule (100).

6. Procédé selon la revendication 5, dans lequel, s'il est trouvé que l'utilisateur dont l'identité est désignée par lesdites données personnelles (D-ID) n'est pas un utilisateur autorisé du véhicule (100), le procédé comprend la génération d'un message d'activation (MSG-A) qui est adapté pour, lors de la réception dans le véhicule (100), provoquer le blocage de toutes les fonctions dans le véhicule (100).

7. Procédé selon l'une quelconque des revendications 5 ou 6, comprenant le stockage de l'une respective d'une description dudit premier ensemble de fonctions véhiculaires (V-CAP) pour chacun d'un certain nombre de véhicules (100) dans une unité de stockage centrale (130) à laquelle l'unité de traitement de données centrale (120) est connectée.

8. Procédé selon l'une quelconque des revendications 5 à 7, comprenant la réception d'informations en fonction desquelles lesdites données personnelles (D-ID) sont générées via au moins l'un de : une carte à puce électronique, un dispositif de saisie de code, un moyen de reconnaissance vocale, un moyen de numérisation d'empreintes digitales, un moyen de reconnaissance faciale, un moyen de reconnaissance d'iris et un moyen de reconnaissance rétinien.

9. Programme informatique directement chargeable dans la mémoire interne (M) d'un ordinateur, comprenant un logiciel pour la commande des étapes selon l'une quelconque des revendications 5 à 8 lorsque ledit programme est exécuté sur l'ordinateur.

10. Support lisible par ordinateur (M) sur lequel est enregistré un programme, où le programme est adapté pour faire en sorte qu'un ordinateur commande les étapes selon l'une quelconque des revendications 5 à 8.
